# EUROPÄISCHE PATENTSCHRIFT

(11) **EP 3 510 362 B1**
(45) Veröffentlichungstag und Bekanntmachung des Hinweises auf die Patenterteilung: **21.07.2021**
(21) Anmeldenummer: 17755147.0
(22) Anmeldetag: 16.08.2017
(51) Int. Cl.: G01D 5/20, G01D 5/244

(54) **DREHWINKELSENSOR, STATORELEMENT SOWIE ROTORELEMENT FÜR DIESEN**
ROTATION ANGLE SENSOR, STATOR ELEMENT AND ROTOR ELEMENT THEREFOR
CAPTEUR DE POSITION ANGULAIRE, ÉLÉMENT STATORIQUE ET ÉLÉMENT ROTORIQUE POUR CE DERNIER

(30) Priorität: 09.09.2016 DE 102016217254
(43) Veröffentlichungstag der Anmeldung: 17.07.2019
(73) Patentinhaber: Robert Bosch GmbH, 70442 Stuttgart (DE)
(72) Erfinder: UTERMOEHLEN, Fabian, 71229 Leonberg (DE); MERZ, Andreas, 71691 Freiberg am Neckar (DE)
(86) Internationale Anmeldenummer: PCT/EP2017/070723
(87) Internationale Veröffentlichungsnummer: WO 2018/046258

(56) Entgegenhaltungen:
- EP-A2- 0 909 955
- DE-A1- 10 320 990
- DE-A1- 19 751 853
- DE-A1-102007 037 217
- DE-A1-102010 002 794
- DE-A1-102013 226 203
- DE-A1-102014 220 454

## Beschreibung

### Stand der Technik

Die Erfindung betrifft einen Drehwinkelsensor, ein Statorelement sowie ein Rotorelement für diesen.

Durch Anordnen von Sende- und Empfangsspulen am Stator eines Drehwinkelsensors, die mit einem Target am Rotor induktiv derart gekoppelt sind, dass bei Aussenden eines elektromagnetischen Wechselfeldes durch die Sendespule in der Empfangsspule eine Wechselspannung induziert wird, kann der Drehwinkel abhängig von der induzierten Wechselspannung erfasst werden.

Dies ist beispielsweise in der EP 0 909 955 B1 beschrieben.

Aus der DE 10 2007 037 217 A1 ist eine induktive Messeinrichtung zur berührungslosen Erfassung der relativen Drehposition zwischen zwei Körpern mit diametral angeordneten Spulen bekannt. Eine Kompensation eines radialen Versatzes zwischen Stator und Rotor bezüglich einer Idealposition bzw. vorgegebenen radialen Position ist nicht vorgesehen.

Aus der DE 10 2010 002 794 A1 ist Induktionserfassungstyp-Drehgeber bekannt. Dabei weist ein Stator zwei Sendespulen und zwei Empfangsspulen auf. Die beiden Empfangsspulen sind konzentrisch zueinander angeordnet. Der Rotor weist zwei konzentrisch zueinander angeordnete elektrisch leitende Abschnitte mit konkaven und konvexen Auswölbungen auf, wobei jeder der beiden elektrisch leitenden Abschnitte mit jeweils einer Empfangsspule induktiv gekoppelt ist. Um ein induktives Übersprechen des ersten elektrisch leitenden Abschnitts auf die zweite Empfangsspule und des zweiten elektrisch leitenden Abschnitts auf die erste Empfangsspule zu verringern und dadurch die Signalqualität des Drehwinkelsignals zu verbessern ist an der radial äußeren Empfangsspule auf der der ersten Empfangsspule zugewandten Seite ein Muster vorgesehen, welches in Umfangsrichtung im Wesentlichen kontinuierlich ist. Eine Kompensation eines radialen Versatzes zwischen Stator und Rotor bezüglich einer Idealposition bzw. vorgegebenen radialen Position ist nicht vorgesehen.

Aus der DE 197 51 853 A1 ist ein induktiver Drehwinkelsensor bekannt. Ein Stator weist zwei konzentrisch zueinander angeordnete Empfangsspulen auf. Der Rotor weist dementsprechend zwei konzentrisch zueinander angeordnete sogenannte Teilungsspuren auf, die mit den Empfangsspulen wechselwirken. Dabei ist die innere Teilungsspur durch einen halbkreisförmigen, elektrisch leitfähigen ersten Teilungsbereich und einen halbkreisförmigen, isolierenden zweiten Teilungsbereich gebildet. Die äußere Teilungsspur besteht aus einer Vielzahl elektrisch leitfähiger Teilungsbereiche, die von elektrisch isolierenden Abschnitten unterbrochen sind. Die Abtastung der beiden Teilungsbereiche ermöglicht aus der Kombination einer absoluten Positionsbestimmung durch die erste Teilungsspur und die inkrementelle Abtastung mittels der zweiten Teilungsspur eine hochauflösende Drehwinkelbestimmung. Eine Kompensation eines radialen Versatzes zwischen Stator und Rotor bezüglich einer Idealposition bzw. vorgegebenen radialen Position ist nicht vorgesehen.

Aus der DE 103 20 990 A1 ist ein induktiver Drehwinkelsensor bekannt, der ähnlich aufgebaut ist und ähnlich funktioniert wie derjenige aus der DE 197 51 853 A1.

### Offenbarung der Erfindung

Bei realen Sensoren können durch Lagerspiel oder fertigungsbedingte Toleranzen bezüglich der relativen Lage von Statorelement und Rotorelement Fehler auftreten, die z.B. so groß sind, dass eine Spezifikation bezüglich der Genauigkeit der gemessenen Drehwinkel nicht mehr erfüllt werden kann.

Es kann daher ein Bedarf bestehen, einen Drehwinkelsensor bereitzustellen, der auch bei radialen Abweichungen des Statorelements bzw. des Stators relativ zum Rotorelement bzw. Rotor von einer Ideallage, z.B. einer zentrierten Lage, die dabei auftretenden Veränderungen im Messsignal für die Winkelerfassung kompensieren kann.

### Vorteile

Es ist daher Aufgabe der vorliegenden Erfindung, einen verbesserten Drehwinkelsensor bereitzustellen.

Diese Aufgabe wird durch den Drehwinkelsensor nach Anspruch 1 gelöst.

Weitere vorteilhafte Ausgestaltungen der vorliegenden Erfindung sind in den abhängigen Ansprüchen angegeben.

Ein entsprechender Drehwinkelsensor umfasst ein Statorelement und ein bezüglich des Statorelements um eine Drehachse drehbar gelagertes Rotorelement, wobei der Drehwinkel durch eine induktive Kopplung zwischen dem Rotorelement und dem Statorelement erfassbar ist. Am Statorelement ist ein Kompensationselement angeordnet, wobei das Kompensationselement eine Kompensations-Sendespule zur Aussendung eines elektromagnetischen Kompensations-Wechselfeldes und mindestens eine Kompensations-Empfangsspule zum Empfangen elektromagnetischer Wechselfelder umfasst. Das Rotorelement weist einen ersten elektrisch leitenden Abschnitt auf, wobei der erste elektrisch leitende Abschnitt am Rotorelement derart angeordnet ist und derart mit der Kompensations-Sendespule und der mindestens einen Kompensations-Empfangsspule des Kompensationselements induktiv gekoppelt ist, dass bei Aussenden des elektromagnetischen Kompensations-Wechselfelds durch die Kompensations-Sendespule eine in der mindestens einen Kompensations-Empfangsspule induzierte Kompensations-Wechselspannung überwiegend von einer relativen radialen Anordnung des Statorelements und des Rotorelements zueinander bezüglich der Drehachse abhängig ist. Das Statorelement weist mindestens eine Winkelerfassungs-Sendespule zur Aussendung eines elektromagnetischen Winkelerfassungs-Wechselfeldes und mindestens eine Winkelerfassungs-Empfangsspule zum Erfassen elektromagnetischer Wechselfelder auf. Das Rotorelement weist mindestens einen zweiten elektrisch leitenden Abschnitt auf, wobei der mindestens eine zweite elektrisch leitende Abschnitt mit der mindestens einen Winkelerfassungs-Empfangsspule induktiv derart gekoppelt ist, dass bei Aussenden des elektromagnetischen Winkelerfassungs-Wechselfeldes durch die mindestens eine Winkelerfassungs-Sendespule in der mindestens einen Winkelerfassungs-Empfangsspule mindestens eine Winkelerfassungs-Wechselspannung induziert wird. Der mindestens eine zweite elektrisch leitende Abschnitt ist am Rotorelement derart angeordnet, dass die in der mindestens einen Winkelerfassungs-Empfangsspule induzierte Winkelerfassungs-Wechselspannung, insbesondere überwiegend, von einem Drehwinkel zwischen dem Statorelement und dem Rotorelement abhängig ist, wobei der mindestens eine zweite elektrisch leitende Abschnitt bezüglich der Drehachse in radialer Richtung betrachtet, außerhalb des ersten elektrisch leitenden Abschnitts am Rotorelement, insbesondere bezüglich der Drehachse keisringsektorförmig, angeordnet ist, und wobei die mindestens eine Winkelerfassungs-Sendespule bezüglich der Drehachse in radialer Richtung betrachtet, außerhalb des Kompensationselements am Statorelement, insbesondere bezüglich der Drehachse innerhalb eines kreisringförmigen Abschnitts des Statorelements, angeordnet ist.

Unter einem "elektrisch leitenden" Abschnitt kann im Sinne dieser Anmeldung auch ein "elektrisch leitfähiger Abschnitt" verstanden werden. Es ist dabei zu verstehen, dass im Allgemeinen als Isolatoren bezeichnete oder verwendete Werkstoffe im Sinne dieser Anmeldung nicht als "elektrisch leitend" bzw. "elektrisch leitfähig" angesehen werden. Lediglich kann beispielsweise ein Metallblech elektrisch leitend bzw. elektrisch leitfähig sein.

Durch das Aussenden des elektromagnetischen Kompensations-Wechselfelds wird in der mindestens einen ersten Kompensations-Empfangsspule die Kompensations-Wechselspannung induziert. Dabei wird der erste elektrisch leitende Abschnitt des Rotorelements, auch als sogenanntes Target bezeichenbar, für die induktive Kopplung verwendet. Die induktive Kopplung hängt dabei von der relativen radialen Anordnung von Target und Kompensationselement ab. Das Target ist am Rotorelement angeordnet, das Kompensationselement ist am Statorelement angeordnet. Damit beeinflusst die relative radiale Anordnung von Rotorelement und Statorelement die induzierte Kompensations-Wechselspannung abhängig von der induktiven Kopplung zwischen dem Kompensationselement und dem Target. Durch Überwachung der induzierten Kompensations-Wechselspannung ist somit die relative radiale Anordnung von Rotorelement und Statorelement überwachbar. Durch die Überwachung kann ein Auftreten von Toleranzen in der Anordnung von Rotorelement und Statorelement erkannt werden. Je nach relativer Überdeckung der mindestens einen Kompensations-Empfangsspule durch den ersten elektrisch leitenden Abschnitt des Rotorelements bzw. durch das Target ändert sich die Amplitude der durch die Kompensations-Sendespule induzierten Spannung.

Durch diese Anordnung wird zudem eine besonders kompakte Bauform des Drehwinkelsensors ermöglicht. Die kompakte Bauform ergibt sich dadurch, dass der mindestens eine zweite elektrisch leitende Abschnitt bezüglich der Drehachse in radialer Richtung betrachtet außerhalb des ersten elektrisch leitenden Abschnitts am Rotorelement angeordnet ist und dass die mindestens eine Winkelerfassungs-Sendespule bezüglich der Drehachse in radialer Richtung betrachtet außerhalb des Kompensationselements am Statorelement angeordnet ist. Bei dieser vorteilhaften Gestaltung ist das Kompensationselement z.B. zentral, insbesondere in einem für die Erfassung des Drehwinkels sonst ungenutzten Bereich in unmittelbarer Nähe der Drehachse, angeordnet.

Erfindungsgemäß weist das Kompensationselement eine erste Kompensations-Empfangsspule und eine zweite Kompensations-Empfangsspule auf, die derart zueinander und bezüglich der Drehachse angeordnet sind, dass durch das elektromagnetische Kompensations-Wechselfeld in der ersten Kompensations-Empfangsspule eine erste Kompensations-Wechselspannung und in der zweiten Kompensations-Empfangsspule eine zweite Kompensations-Wechselspannung induziert wird, wobei sich erste Kompensations-Wechselspannung und zweite Kompensations-Wechselspannung bei einer radialen Verschiebung des ersten elektrisch leitenden Abschnitts gegenüber einer vorgegebenen radialen Anordnung des ersten elektrisch leitenden Abschnitts bezüglich der Drehachse im Vergleich zu den Werten verändern, die die erste Kompensations-Wechselspannung und die zweite Kompensations-Wechselspannung annehmen, wenn der erste leitende Abschnitt sich in der vorgegebenen radialen Anordnung befindet.

Dies ist eine besonders günstige Anordnung für einen Drehwinkelsensor. Wird beispielsweise ein Versatz von 90° gewählt, kann ein kartesisches Koordinatensystem mit Ursprung in der Drehachse so definiert werden, dass die Kompensations-Wechselspannungen der zwei Kompensations-Empfangsspulen als Signale interpretierbar sind, die eine Abweichung von der vorgegebenen radialen Anordnung in x-Richtung und y-Richtung angeben. Dadurch lassen sich radiale Abweichungen der relativen Anordnung des Rotorelements bezüglich des Statorelements als Linearkombination der Abweichungen entlang der x-Achse und der y-Achse messen. In diesem Fall können beispielsweise in einer Ruhelage des Rotorelements im Drehwinkelsensor zwei Kompensations-Empfangsspulen um 90° versetzt angeordnet sein. So wird mit vektorieller Messung direkt ein horizontaler sowie vertikaler Versatz bestimmt. Damit können bei 90° Versatz direkt x- und y-Toleranzen gemessen werden, ohne dass eine Umrechnung erfolgen muss.

Vorzugsweise ist eine Wicklung der mindestens einen Kompensations-Empfangsspule radial zur Drehachse zumindest teilweise überlappend mit dem ersten elektrisch leitenden Abschnitt angeordnet, wobei insbesondere die radiale Ausdehnung des ersten elektrisch leitenden Abschnitts kleiner als die radiale Ausdehnung der mindestens einen Kompensations-Empfangsspule ist.

Bei Auftreten von Toleranzen bewegt sich der erste elektrisch leitende Abschnitt radial bezüglich der Drehachse. Diese Bewegung erfolgt innerhalb eines Gebiets, in dem sich der erste elektrisch leitende Abschnitt und die mindestens eine Kompensations-Empfangsspule zumindest teilweise überlappen. Durch diese Bewegung entstehen unterschiedlich starke induktive Kopplungen, die als unterschiedliche Kompensations-Wechselspannungen erfassbar sind. Mit dieser Anordnung werden Toleranzen besonders gut erkennbar.

Vorzugsweise ist eine Wicklung der mindestens einen Kompensations-Sendespule radial zur Drehachse zumindest teilweise überlappend mit dem ersten elektrisch leitenden Abschnitt angeordnet, wobei insbesondere die radiale Ausdehnung des ersten elektrisch leitenden Abschnitts kleiner als die radiale Ausdehnung der mindestens einen Kompensations-Sendespule ist.

Bei Auftreten von Toleranzen bewegt sich der erste elektrisch leitende Abschnitt radial bezüglich der Drehachse. Diese Bewegung erfolgt innerhalb eines Gebiets, in dem sich der erste elektrisch leitende Abschnitt und die mindestens eine Kompensations-Sendespule zumindest teilweise überlappen. Durch diese Bewegung entstehen unterschiedlich starke induktive Kopplungen, die als unterschiedliche Kompensations-Wechselspannungen erfassbar sind. Mit dieser Anordnung werden Toleranzen besonders gut erkennbar.

Vorteilhafterweise ist der mindestens eine erste elektrisch leitende Abschnitt ein das Rotorelement in Umfangrichtung umlaufender elektrisch leitfähiger Kreis oder Kreisring. Dadurch deckt ein einzelner erster elektrisch leitender Abschnitt für einen 360° Drehwinkelsensor jeden Winkelbereich ab. Diese Form des ersten elektrisch leitenden Abschnitts ist insbesondere als Stanzteil besonders einfach herstellbar.

Vorteilhafterweise erstreckt sich der mindestens eine erste elektrisch leitende Abschnitt von der Drehachse radial, wobei sich der mindestens eine zweite elektrisch leitende Abschnitt an den ersten elektrisch leitenden Abschnitt radial, also sich z.B. in Richtung Drehachse erstreckend, anschließt. Der erste elektrisch leitende Abschnitt ist in radialer Richtung betrachtet zwischen der Drehachse und dem zweiten elektrisch leitenden Abschnitt angeordnet, wobei in radialer Richtung betrachtet zwischen dem zweiten elektrisch leitenden Abschnitt und dem ersten elektrisch leitenden Abschnitt ein, vorzugsweise kreisringsektorförmiger, Spalt oder Schlitz vorgesehen ist, der sich vorzugsweise in Umfangrichtung erstreckt. Diese Anordnung verhindert eine unbeabsichtigte induktive Kopplung des zweiten elektrisch leitenden Abschnitts mit dem Kompensationselement. Dadurch wird eine Fehlerkennung vermieden.

Vorteilhafterweise ist eine radiale Ausdehnung der mindestens einen Kompensations-Empfangsspule größer als eine radiale Ausdehnung des ersten leitenden Abschnitts.

Durch die radial zur Drehachse gesehen größere Ausdehnung der Kompensations-Empfangsspule überlappt diese mit dem ersten elektrisch leitenden Abschnitt bei der zentrierten Anordnung vollständig. Dies verbessert die induktive Kopplung zwischen Kompensations-Empfangsspule und erstem elektrisch leitenden Abschnitt in zentrierter Lage von Rotorelement und Statorelement.

Vorteilhafterweise beträgt die Ausdehnung des Spaltes oder des Schlitzes in radialer Richtung wenigstens 50% der Differenz aus einer radialen Ausdehnung der mindestens einen Kompensations-Empfangsspule und einer radialen Ausdehnung des ersten leitenden Abschnitts.

Auch bei Auftreten von Toleranzen bleibt radial zur Drehachse gesehen so genügend Abstand zwischen zweitem leitenden Abschnitt und Kompensations-Empfangsspule, um eine unbeabsichtigte induktive Kopplung zwischen zweitem leitenden Abschnitt und Kompensations-Empfangsspule zu vermeiden. Die radiale Ausdehnung des ersten leitenden Abschnitts kann z.B. höchstens 90% oder sogar höchstens 80% der radialen Ausdehnung der mindestens einen Kompensations-Empfangsspule betragen.

Erfindungsgemäß umfasst die mindestens eine Kompensations-Empfangsspule eine identische Anzahl von ersten Teilwicklungen und zweiten Teilwicklungen, die derart zueinander und bezüglich der Drehachse angeordnet sind, dass durch das elektromagnetische Kompensations-Wechselfeld in der ersten Teilwicklung ein erster Wechselspannungsanteil und in der zweiten Teilwicklung ein zweiter Wechselspannungsanteil mit umgekehrtem Vorzeichen induziert wird, wobei sich erster Wechselspannungsanteil und zweiter Wechselspannungsanteil in einer vorgegebenen radialen Anordnung des ersten elektrisch leitenden Abschnitts bezüglich der Drehachse kompensieren. Die induzierte Spannung ist somit in der vorgegebenen radialen Anordnung 0V. Dadurch ist die vorgegebene radiale Anordnung leicht detektierbar.

Vorzugsweise ist der erste elektrisch leitende Abschnitt bezüglich der Drehachse symmetrisch, wenn sich der erste elektrisch leitende Abschnitt in einer vorgegebenen radialen Anordnung zur Drehachse befindet.

Die symmetrische, insbesondere punktsymmetrische, Anordnung bewirkt, dass in zentrierter Lage des ersten elektrisch leitenden Abschnitts bezüglich der Drehachse die in der mindestens einen Kompensations-Empfangsspule induzierte Spannung 0V ist. Dadurch wird eine zentrierte Lage von Rotorelement und Statorelement einfach erfassbar.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Fig. 1: schematisch eine Ansicht eines Teils eines Drehwinkelsensors in einer Seitenansicht,
- Fig. 2: schematisch eine Ansicht eines Teils des Drehwinkelsensors in einer Aufsicht,
- Fig. 3: schematisch zwei Detail-Ansichten des Drehwinkelsensors bei einer ersten Anordnung eines Statorelements und eines Rotorelements im Drehwinkelsensor,
- Fig. 4: schematisch zwei Detail-Ansichten des Drehwinkelsensors bei einer zweiten Anordnung des Statorelements und des Rotorelements im Drehwinkelsensor,
- Fig. 5: schematisch zwei Detail-Ansichten des Drehwinkelsensors bei einer dritten Anordnung des Statorelements und des Rotorelements im Drehwinkelsensor.

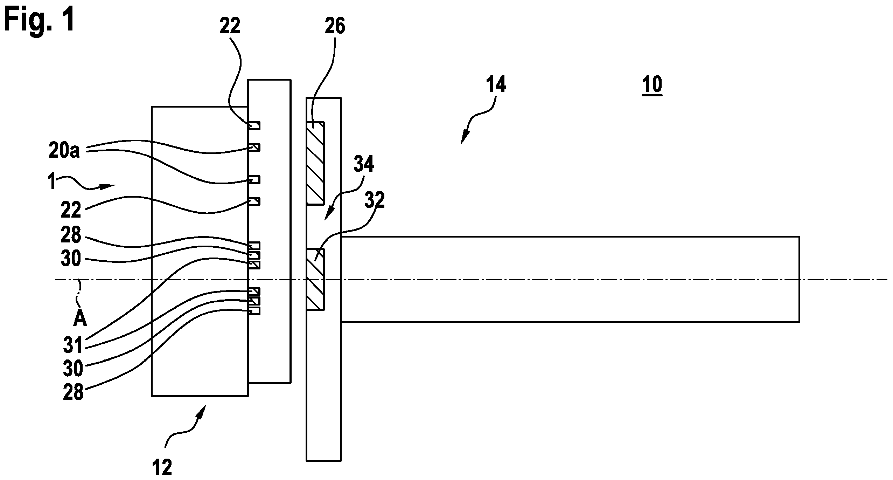

Fig. 1 zeigt schematisch eine Seitenansicht eines Drehwinkelsensors 10, umfassend ein Statorelement 12 und ein bezüglich des Statorelements 12 um eine Drehachse A drehbar gelagertes Rotorelement 14.

Der Drehwinkel ist durch eine induktive Kopplung zwischen dem Rotorelement 14 und dem Statorelement 12 erfassbar. Details zur induktiven Kopplung und deren Verwendung zur Bestimmung des Drehwinkels sind beispielsweise in der EP 0 909 955 B1 beschrieben.

Dementsprechend weist das Statorelement 12 beispielsweise die in Fig. 1 dargestellte mindestens eine Winkelerfassungs-Sendespule 22 zur Aussendung eines elektromagnetischen Winkelerfassungs-Wechselfeldes und mindestens eine Winkelerfassungs-Empfangsspule 20 zum Erfassen elektromagnetischer Wechselfelder auf. Die Winkelerfassungs-Empfangsspule 20 erstreckt sich vorzugsweise in einer Ebene senkrecht zur Drehachse A in radialer Richtung innerhalb der Winkelerfassungs-Sendespule 22. Vorzugsweise ist die Winkelerfassungs-Empfangsspule 20 in derselben Ebene einer Sensor-Leiterplatte für den Drehwinkelsensor 10 angeordnet, in der die Winkelerfassungs-Sendespule 22 angeordnet ist.

"Radial" oder "radiale Anordnung" bedeutet im Folgenden eine speichenförmige von der Drehachse A ausgehende Richtung oder Anordnung. "Umlaufend" oder "umlaufende Richtung" bedeutet im Folgenden eine kreisförmige Richtung im Wesentlichen in einer Ebene senkrecht zur Drehachse A. "Axiale Richtung" bedeutet im Folgenden eine Richtung entlang der Drehachse A.

Eine Sensor-Leiterplatte für den Drehwinkelsensor 10 umfasst beispielsweise mindestens eine umlaufend angeordnete Winkelerfassungs-Sendespule 22, die eine oder mehrere Wicklungen aufweist und vorzugsweise als Planarspule ausgeführt ist. Die Wicklungen können vorteilhaft in mehreren Ebenen einer mehrlagigen Leiterplatte realisiert sein, um ein ausreichend großes elektromagnetisches Wechselfeld erzeugen zu können. Die mindestens eine Winkelerfassungs-Sendespule 22 wird mit einer Wechselspannung beaufschlagt, die Amplituden im Bereich 0.5 V bis 10 V, bevorzugt 1.5 V, bei Frequenzen im Bereich einiger MHz, bevorzugt 5 MHz, aufweist.

Am Statorelement 12 ist ein Kompensationselement 1 angeordnet. Das Kompensationselement 1 umfasst eine Kompensations-Sendespule 28 zur Aussendung eines elektromagnetischen Kompensations-Wechselfeldes und mindestens eine Kompensations-Empfangsspule 30, 31 zum Empfangen elektromagnetischer Wechselfelder. Die mindestens eine Kompensations-Empfangsspule 30, 31 erstreckt sich vorzugsweise in einer Ebene senkrecht zur Drehachse A in radialer Richtung bezüglich der Drehachse A innerhalb der Kompensations-Sendespule 28. Vorzugsweise ist die mindestens eine Kompensations-Empfangsspule 30, 31 in derselben Ebene der Sensor-Leiterplatte für den Drehwinkelsensor 10 angeordnet, in der die Kompensations-Sendespule 28 angeordnet ist.

Das Rotorelement 14 weist einen ersten elektrisch leitenden Abschnitt 32 auf.

Der erste elektrisch leitende Abschnitt 32 ist am Rotorelement 14 derart angeordnet und derart mit der Kompensations-Sendespule 28 und der mindestens einen Kompensations-Empfangsspule 30, 31 des Kompensationselements 1 induktiv gekoppelt, dass bei Aussenden des elektromagnetischen Kompensations-Wechselfelds durch die Kompensations-Sendespule 28 eine in der mindestens einen Kompensations-Empfangsspule 30, 31 induzierte Kompensations-Wechselspannung überwiegend von einer bezüglich der Drehachse radialen Anordnung des Statorelements 12 und des Rotorelements 14 zueinander abhängig ist.

Das Rotorelement 14 weist mindestens einen zweiten elektrisch leitenden Abschnitt 26 auf. Der mindestens eine zweite elektrisch leitende Abschnitt 26 ist mit der mindestens einen Winkelerfassungs-Empfangsspule 20 induktiv derart gekoppelt, dass bei Aussenden des elektromagnetischen Winkelerfassungs-Wechselfeldes durch die mindestens eine Winkelerfassungs-Sendespule 22 in der mindestens einen Winkelerfassungs-Empfangsspule 20 mindestens eine Winkelerfassungs-Wechselspannung induziert wird.

Der mindestens eine zweite elektrisch leitende Abschnitt 26 ist am Rotorelement 14 derart angeordnet, dass die in der mindestens einen Winkelerfassungs-Empfangsspule 20 induzierte Winkelerfassungs-Wechselspannung, insbesondere überwiegend, von einem Drehwinkel zwischen dem Statorelement 12 und dem Rotorelement 14 abhängig ist.

Der mindestens eine zweite elektrisch leitende Abschnitt 26 ist bezüglich der Drehachse A in radialer Richtung betrachtet, außerhalb des ersten elektrisch leitenden Abschnitts 32 am Rotorelement 14 angeordnet.

Die mindestens eine Winkelerfassungs-Sendespule 22 ist bezüglich der Drehachse A in radialer Richtung betrachtet, außerhalb des Kompensationselements 1 am Statorelement 12 angeordnet.

Einzelheiten zur Anordnung der mindestens einen Winkelerfassungs-Sendespule 22, der mindestens einen Winkelerfassungs-Empfangsspule 20, und des mindestens einen zweiten elektrisch leitenden Abschnitt 26 sowie Einzelheiten zur Bestimmung des Drehwinkels sind beispielsweise aus der EP 0 909 955 B1 bekannt.

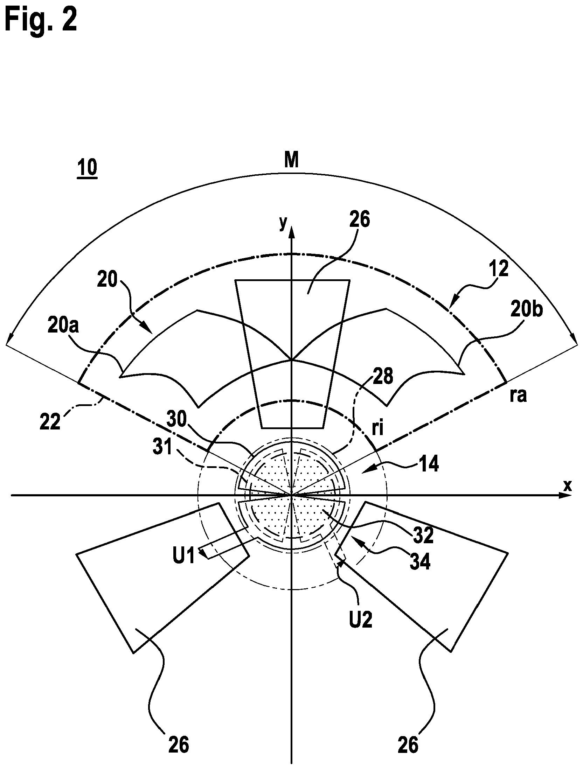

Fig. 2 zeigt eine Aufsicht auf den Drehwinkelsensor 10 in einem zweidimensionalen kartesischen Koordinatensystem dessen x-Achse und y-Achse senkrecht zur Drehachse A verlaufen und dessen Ursprung auf der Drehachse A liegt.

Die mindestens eine Winkelerfassungs-Sendespule 22 weist mindestens eine Leiterbahn auf, welche die mindestens eine Winkelerfassungs-Empfangsspule 20 umläuft. Vorzugsweise verläuft die mindestens eine Winkelerfassungs-Sendespule 22 innerhalb einer kreisringförmigen oder kreisringsektorförmigen Fläche, die von einem inneren Radius ri und einem äußeren Radius ra begrenzt wird. Für einen Drehwinkelsegmentsensor der einen Messbereich kleiner als 360° aufweist, ist ein beispielsweise ein Mittelpunktswinkel M des Kreisringsektors vorgesehen, der 5° bis 10° größer ist als der Messbereich des Drehsegmentsensors. Wenn der Drehsegmentsensor beispielsweise einen Messbereich von 120° hat, beträgt der Mittelpunktswinkel M des Kreisringsektors beispielsweise M = 130°.

Der äußere Radius ra wird beispielsweise durch den verfügbaren Bauraum begrenzt und beträgt einige 10 mm und bevorzugt 25 mm. Der innere Radius ri ist so groß dimensioniert, dass die Kompensationsspulen platziert werden können und ein ausreichend hohes Signal liefern. Um die Feldstärke zu vergrößern, kann die mindestens eine Winkelerfassungs-Sendespule 22 in mehreren Ebenen der Sensor-Leiterplatte ausgeführt sein.

Die mindestens einen Winkelerfassungs-Empfangsspule 20 ist wie in Fig. 2 dargestellt, ebenfalls zwischen innerem Radius ri und äußerem Radius ra angeordnet. Beispielsweise wird die mindestens eine Winkelerfassungs-Empfangsspule 20 durch mindestens zwei Teilwicklungen 20a, 20b gebildet, die jeweils bei einem Stromfluss in unterschiedlichen Richtungen (gegen den Uhrzeigersinn bzw. im Uhrzeigersinn) vom elektrischen Strom durchflossen werden. Die mindestens zwei Teilwicklungen 20a, 20b können in unterschiedlichen Ebenen der Leiterplatte ausgebildet sein.

Vorzugsweise weist das Rotorelement 14 mindestens einen kreisringsektorförimgen elektrisch leitenden Abschnitt 26 auf. Im Beispiel von Fig. 2 sind drei kreisringsektorförmige elektrisch leitende Abschnitte 26 dargestellt. Ein Kreisring (nicht dargestellt) in dem der jeweilige Sektor des elektrische leitenden Abschnitts 26 liegt, hat bezüglich der Drehachse A einen inneren Radius, der vorzugsweise etwas kleiner ist als der innere Radius ri. Der Kreisring in dem der jeweilige Sektor des elektrische leitenden Abschnitts 26 liegt, hat bezüglich der Drehachse A einen äußeren Radius, der vorzugsweise etwas größer ist als der äußere Radius ra.

Die Öffnungswinkel (nicht dargestellt) der Sektoren in denen die in Fig. 2 schematisch dargestellten drei elektrisch leitenden Abschnitte 26 liegen, beträgt vorzugsweise 60°. Der Winkelabstand zwischen den elektrisch leitenden Abschnitten 26 beträgt in diesem Fall vorzugsweise 60°. Der Öffnungswinkel eines kreissektorförmigen Abschnitts beträgt vorzugsweise M/2.

Das Kompensationselement 1 weist im Beispiel eine erste Kompensations-Empfangsspule 30 und eine zweite Kompensations-Empfangsspule 31 auf. Diese sind im Beispiel derart zueinander und bezüglich der Drehachse A angeordnet, dass durch das elektromagnetische Kompensations-Wechselfeld in der ersten Kompensations-Empfangsspule 30 eine erste Kompensations-Wechselspannung U1 und in der zweiten Kompensations-Empfangsspule 31 eine zweite Kompensations-Wechselspannung U2 induziert wird.

Wie in Fig. 2 schematisch dargestellt, ist die erste Kompensations-Empfangsspule 30 bezüglich der Drehachse A in radialer Richtung gesehen außerhalb der zweiten Kompensations-Empfangsspule 31 angeordnet. Die Kompensations-Sendespule 28 ist bezüglich der Drehachse A in radialer Richtung gesehen außerhalb der ersten Kompensations-Empfangsspule 30 angeordnet. Bevorzugt ist die geometrische Form der ersten Kompensations-Empfangsspule 30 und der zweiten Kompensations-Empfangsspule 31 dieselbe. Bevorzugt sind die erste Kompensations-Empfangsspule 30 und die zweite Kompensations-Empfangsspule 31 gegeneinander um 90° verdreht am Statorelement 12 angeordnet. Bevorzugt sind die erste Kompensations-Empfangsspule 30 und die zweite Kompensations-Empfangsspule 31 bezüglich der Drehachse A zentriert am Statorelement 12 angeordnet.

Die Abmessungen der ersten Kompensations-Empfangsspule 30 und der zweiten Kompensations-Empfangsspule 31 sowie des ersten elektrisch leitenden Abschnitts 32 sind so dimensioniert, dass eine Wicklung der ersten Kompensations-Empfangsspule 30 und eine Wicklung der zweiten Kompensations-Empfangsspule 31 radial zur Drehachse A zumindest teilweise überlappend mit dem ersten elektrisch leitenden Abschnitt 32 angeordnet ist. Die radiale Ausdehnung des ersten elektrisch leitenden Abschnitts 32 ist vorzugsweise kleiner als die radiale Ausdehnung der ersten Kompensations-Empfangsspule 30 und der zweiten Kompensations-Empfangsspule 31.

Die Abmessungen der mindestens einen Kompensations-Sendespule 28 und des ersten elektrisch leitenden Abschnitts 32 sind so dimensioniert, dass die mindestens eine Kompensations-Sendespule 28 radial zur Drehachse A zumindest teilweise überlappend mit dem ersten elektrisch leitenden Abschnitt 32 angeordnet ist. Die radiale Ausdehnung des ersten elektrisch leitenden Abschnitts 32 ist vorzugsweise kleiner als die radiale Ausdehnung der mindestens einen Kompensations-Sendespule 28.

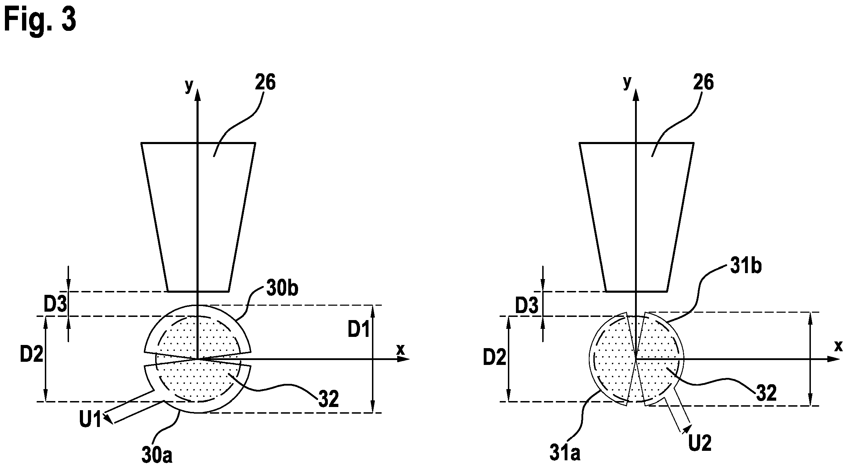

Die erste Kompensations-Empfangsspule 30 wird durch mindestens zwei Teilwicklungen 30a, 30b gebildet, die aus Gründen der Übersichtlichkeit nur in den Figs. 3 bis 5 mit Bezugszeichen versehen sind. Die zweite Kompensations-Empfangsspule 31 wird vorzugsweise durch mindestens zwei Teilwicklungen 31a, 31b gebildet, die ebenfalls aus Gründen der Übersichtlichkeit nur in den Figs. 3 bis 5 mit Bezugszeichen versehen sind. Die mindestens zwei Teilwicklungen 30a und 30b werden jeweils bei einem Stromfluss in unterschiedlichen Richtungen (gegen den Uhrzeigersinn bzw. im Uhrzeigersinn) vom elektrischen Strom durchflossen. Die mindestens zwei Teilwicklungen 31a und 31b werden jeweils bei einem Stromfluss in unterschiedlichen Richtungen (gegen den Uhrzeigersinn bzw. im Uhrzeigersinn) vom elektrischen Strom durchflossen. Die mindestens zwei Teilwicklungen 30a, 30b bzw. 31a, 31b können in unterschiedlichen Ebenen der Leiterplatte ausgebildet sein.

Fig. 3 zeigt schematisch im kartesischen Korrdinatensystem aus Fig. 2 für jede der beiden Kompensations-Empfangsspulen 30, 31 ihre jeweilige Anordnung im Drehwinkelsensor 10. In Fig. 3 ist die Anordnung der beiden Kompensations-Empfangsspulen 30, 31 bei einer vorgegebenen zentrierten Lage des Statorelements 12 und des Rotorelements 14 im Drehwinkelsensor 10 dargestellt. In dieser sind das Statorelement 12 und das Rotorelement 14 bezüglich der Drehachse A zentriert. Dies bedeutet, es treten weder in x-Richtung noch in y-Richtung Toleranzen auf. Mit anderen Worten: Statorelement 12 und Rotorelement befinden sich relativ zueinander in einer Soll-Positionierung ohne Abweichung.

Der erste elektrisch leitende Abschnitt 32 ist wie in Fig. 3 dargestellt kreisförmig ausgebildet. Der erste elektrisch leitende Abschnitt 32 kann auch kreisringförmig ausgebildet sein. Der erste elektrisch leitende Abschnitt 32 ist vorzugsweise als ein das Rotorelement 14 in Umfangrichtung umlaufender elektrisch leitfähiger Kreis oder Kreisring ausgebildet. Prinzipiell sind auch andere, bezüglich der Drehachse A punktsymmetrische, Formen möglich.

Bevorzugt ist der erste elektrisch leitende Abschnitt 32, in einer Ebene senkrecht zur Drehachse A, symmetrisch, insbesondere punktsymmetrisch zur Drehachse A ausgebildet.

In der vorgegebenen, zentrierten Lage des Statorelements 12 und des Rotorelements 14 befinden sich somit die erste Kompensations-Empfangsspule 30 und die zweite Kompensations-Empfangsspule 31 sowie der erste elektrisch leitende Abschnitt 32 bezüglich der Drehachse A ebenfalls in zentrierter Lage.

Die erste Kompensations-Empfangsspule 30 weist bevorzugt eine identische Anzahl von ersten Teilwicklungen 30a und zweiten Teilwicklungen 30b auf. Diese sind derart zueinander und bezüglich der Drehachse A angeordnet, dass durch das elektromagnetische Kompensations-Wechselfeld in der ersten Teilwicklung 30a ein erster Wechselspannungsanteil und in der zweiten Teilwicklung 30b ein zweiter Wechselspannungsanteil mit umgekehrtem Vorzeichen induziert wird.

Die zweite Kompensations-Empfangsspule 31 weist bevorzugt eine identische Anzahl von ersten Teilwicklungen 31a und zweiten Teilwicklungen 31b auf. Diese sind derart zueinander und bezüglich der Drehachse A angeordnet, dass durch das elektromagnetische Kompensations-Wechselfeld in der ersten Teilwicklung 31a ein erster Wechselspannungsanteil und in der zweiten Teilwicklung 31b ein zweiter Wechselspannungsanteil mit umgekehrtem Vorzeichen induziert wird.

Dadurch kompensieren sich die in den Teilwicklungen 30a und 30b induzierten Spannungen und die erste Kompensations-Wechselspannung U1 wird 0V. Dadurch kompensieren sich die in den Teilwicklungen 30a und 30b induzierten Spannungen und die zweite Kompensations-Wechselspannung U2 wird 0V. Dadurch kann die zentrierte Lage einfach erfasst werden.

Der erste elektrisch leitende Abschnitt 32 erstreckt sich von der Drehachse A radial. Der mindestens eine zweite elektrisch leitende Abschnitt 26 schließt vorzugsweise an den ersten elektrisch leitenden Abschnitt 32 radial an. Der erste elektrisch leitende Abschnitt 32 ist in radialer Richtung betrachtet zwischen der Drehachse A und dem zweiten elektrisch leitenden Abschnitt 26 angeordnet.

In radialer Richtung betrachtet ist zwischen dem zweiten elektrisch leitenden Abschnitt 26 und dem ersten elektrisch leitenden Abschnitt 32 ein, vorzugsweise kreisringsektorförmiger, Spalt 34 oder Schlitz 34 vorgesehen, der sich vorzugsweise in Umfangrichtung erstreckt.

Der Spalt 34 oder der Schlitz 34 trennt dabei den ersten elektrisch leitenden Abschnitt 32 und den zweiten elektrisch leitenden Abschnitt 26. Der Schlitz 34 oder Spalt 34 kann unterschiedliche geometrische Formen haben und ist vorzugsweise über den kleinsten radialen Abstand definiert, in dem der erste elektrisch leitende Abschnitt 32 und der zweite elektrisch leitende Abschnitt 26 am Rotorelement 14 angeordnet sind. Der Spalt 34 oder Schlitz 34 ist beispielsweise kreisringförmig ausgebildet.

Eine radiale Ausdehnung D1 der ersten Kompensations-Empfangsspule 30 bzw. der zweiten Kompensations-Empfangsspule 31 ist, wie in Fig. 3 dargestellt größer, als eine radiale Ausdehnung D2 des ersten elektrisch leitenden Abschnitts 32.

Die Ausdehnung D3 des Spaltes 34 oder des Schlitzes 34 in radialer Richtung beträgt vorzugsweise wenigstens 50% der Differenz aus der radialen Ausdehnung D1 der ersten Kompensations-Empfangsspule 30 und der radialen Ausdehnung D2 des ersten elektrisch leitenden Abschnitts 32.

Durch diesen Abstand werden bei radialen Verschiebungen induktive Kopplungen des ersten leitenden Abschnitts 32 und der Winkelerfassungs-Empfangsspule 20 bzw. des zweiten elektrisch leitenden Abschnitts 26 und der ersten Kompensations-Empfangsspule 30 oder der zweiten Kompensations-Empfangsspule 31 vermieden. Grundsätzlich ist eine punktsymmetrische Anordnung bzw. Gestaltung von erstem leitendem Abschnitt 32 und zweitem elektrisch leitendem Abschnitt 26 ausreichend.

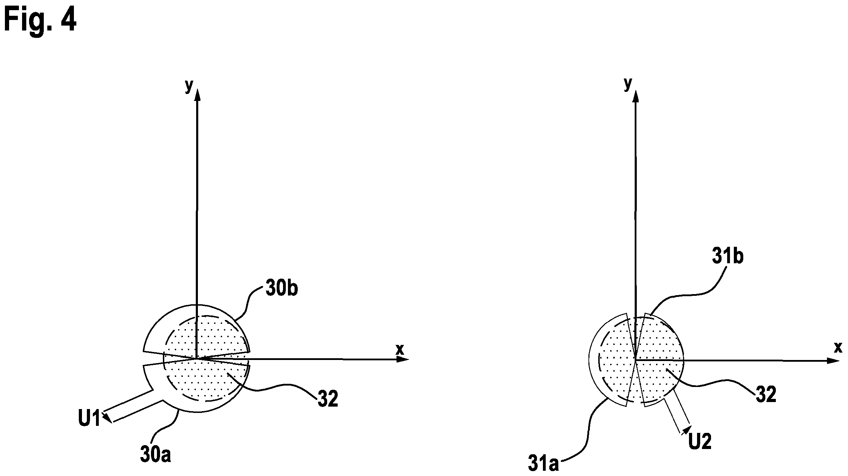

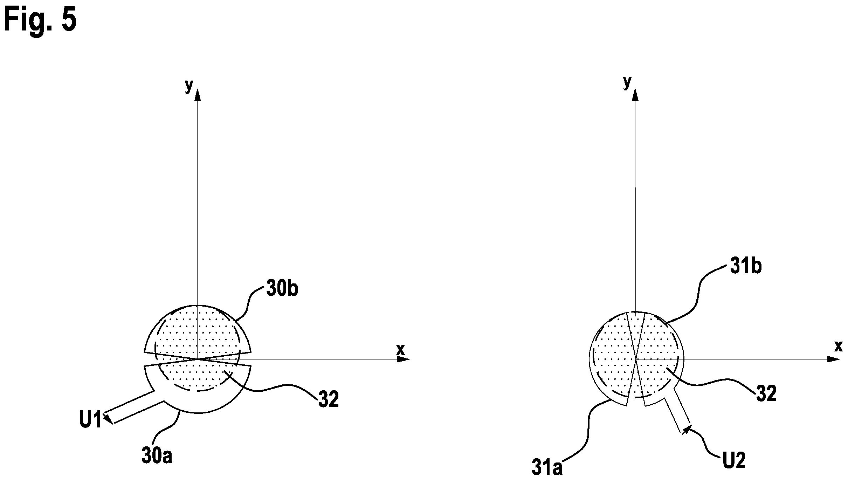

Die erste Kompensations-Wechselspannung U1 und die zweite Kompensations-Wechselspannung U2 unterscheiden sich bei einer radialen Verschiebung des ersten elektrisch leitenden Abschnitts 32 gegenüber einer vorgegebenen radialen Anordnung des ersten elektrisch leitenden Abschnitts 32 bezüglich der Drehachse A. Dies wird im Folgenden im kartesischen Koordinatensystem aus Fig. 2 anhand Fig. 4 und Fig. 5 beschrieben.

Fig. 4 zeigt schematisch zwei Detail-Ansichten des Drehwinkelsensors 10 bei einer Anordnung des Statorelements 12 und des Rotorelements 14 im Drehwinkelsensor 10, in der eine radiale Verschiebung nur in x-Richtung auftritt. Mit anderen Worten: die Spiegelsymmetrie des ersten leitenden Abschnitts 32 zur x-Achse bleibt erhalten. Dafür ist der erste leitende Abschnitt 32 nicht mehr spiegelsymmetrisch zur y-Achse.

In der ersten Kompensations-Empfangsspule 30 wird somit in den mindestens zwei Teilwicklungen 30a und 30b eine Spannung desselben Betrags mit unterschiedlichem Vorzeichen induziert. Dadurch kompensieren sich die in den mindestens zwei Teilwicklungen 30a und 30b induzierten Spannungen und die erste Kompensations-Wechselspannung U1 wird 0V.

In der zweiten Kompensations-Empfangsspule 31 wird dagegen in den mindestens zwei Teilwicklungen 31a und 31b eine Spannung unterschiedlichen Betrags mit unterschiedlichem Vorzeichen induziert. Dadurch kompensieren sich die in den mindestens zwei Teilwicklungen 31a und 31b induzierten Spannungen nicht und die zweite Kompensations-Wechselspannung U2 wird ungleich 0V.

Fig. 5 zeigt schematisch zwei Detail-Ansichten des Drehwinkelsensors 10 bei einer Anordnung des Statorelements 12 und des Rotorelements 14 im Drehwinkelsensor 10, in der eine radiale Verschiebung nur in y-Richtung auftritt. Mit anderen Worten: die Spiegelsymmetrie des ersten leitenden Abschnitts 32 zur y-Achse bleibt erhalten. Dafür ist der erste leitende Abschnitt 32 nicht mehr spiegelsymmetrisch zur x-Achse.

In der ersten Kompensations-Empfangsspule 30 wird somit in den mindestens zwei Teilwicklungen 30a und 30b eine Spannung unterschiedlichen Betrags mit unterschiedlichem Vorzeichen induziert. Dadurch kompensieren sich die in den mindestens zwei Teilwicklungen 30a und 30b induzierten Spannungen nicht und die erste Kompensations-Wechselspannung U1 wird ungleich 0V.

In der zweiten Kompensations-Empfangsspule 31 wird dagegen in den mindestens zwei Teilwicklungen 31a und 31b eine Spannung desselben Betrags mit unterschiedlichem Vorzeichen induziert. Dadurch kompensieren sich die in den mindestens zwei Teilwicklungen 31a und 31b induzierten Spannungen und die zweite Kompensations-Wechselspannung U2 wird 0V.

Die erste Kompensations-Empfangsspule 30 und die zweite Kompensations-Empfangsspule 31 sind generell so angeordnet, dass sich bei einer (radialen) Verschiebung des ersten leitenden Abschnitts 32 die erste Kompensations-Wechselspannung U1 und die zweite Kompensations-Wechselspannung U2 verändern im Vergleich zu den Werten, die die erste Kompensations-Wechselspannung U1 und die zweite Kompensations-Wechselspannung U2 annehmen, wenn der erste leitende Abschnitt 32 sich in der vorgegebenen radialen Lage bzw. Soll-Position befindet. Bevorzugt betragen die erste Kompensations-Wechselspannung U1 und die zweite Kompensations-Wechselspannung U2 in der vorgegebenen radialen Lage bzw. in der Soll-Position jeweils 0V (Null Volt).

## Patentansprüche

1. Drehwinkelsensor (10), umfassend
ein Statorelement (12),
ein bezüglich des Statorelements (12) um eine Drehachse (A) drehbar gelagertes Rotorelement (14), wobei der Drehwinkel durch eine induktive Kopplung zwischen dem Rotorelement (14) und dem Statorelement (12) erfassbar ist,
**dadurch gekennzeichnet, dass**
am Statorelement (12) ein Kompensationselement (1) angeordnet ist, wobei das Kompensationselement (1) eine Kompensations-Sendespule (28) zur Aussendung eines elektromagnetischen Kompensations-Wechselfeldes und mindestens eine Kompensations-Empfangsspule (30, 31) zum Empfangen elektromagnetischer Wechselfelder umfasst, wobei das Rotorelement (14) einen ersten elektrisch leitenden Abschnitt (32) aufweist,
wobei der erste elektrisch leitende Abschnitt (32) am Rotorelement (14) derart angeordnet ist und derart mit der Kompensations-Sendespule (28) und der mindestens einen Kompensations-Empfangsspule (30, 31) des Kompensationselements (1) induktiv gekoppelt ist, dass bei Aussenden des elektromagnetischen Kompensations-Wechselfelds durch die Kompensations-Sendespule (28) eine in der mindestens einen Kompensations-Empfangsspule (30, 31) induzierte Kompensations-Wechselspannung überwiegend von einer relativen radialen Anordnung des Statorelements (12) und des Rotorelements (14) zueinander bezüglich der Drehachse (A) abhängig ist,
wobei das Statorelement (12) mindestens eine Winkelerfassungs-Sendespule (22) zur Aussendung eines elektromagnetischen Winkelerfassungs-Wechselfeldes und mindestens eine Winkelerfassungs-Empfangsspule (20) zum Erfassen elektromagnetischer Wechselfelder aufweist,
wobei das Rotorelement (14) mindestens einen zweiten elektrisch leitenden Abschnitt (26) aufweist,
wobei der mindestens eine zweite elektrisch leitende Abschnitt (26) mit der mindestens einen Winkelerfassungs-Empfangsspule (20) induktiv derart gekoppelt ist, dass bei Aussenden des elektromagnetischen Winkelerfassungs-Wechselfeldes durch die mindestens eine Winkelerfassungs-Sendespule (22) in der mindestens einen Winkelerfassungs-Empfangsspule (20) mindestens eine Winkelerfassungs-Wechselspannung induziert wird,
wobei der mindestens eine zweite elektrisch leitende Abschnitt (26) am Rotorelement (14) derart angeordnet ist, dass die in der mindestens einen Winkelerfassungs-Empfangsspule (20) induzierte Winkelerfassungs-Wechselspannung, insbesondere überwiegend, von einem Drehwinkel zwischen dem Statorelement (12) und dem Rotorelement (14) abhängig ist, wobei der mindestens eine zweite elektrisch leitende Abschnitt (26) bezüglich der Drehachse (A) in radialer Richtung betrachtet, außerhalb des ersten elektrisch leitenden Abschnitts (32) am Rotorelement (14) angeordnet ist, und wobei die mindestens eine Winkelerfassungs-Sendespule (22) bezüglich der Drehachse (A) in radialer Richtung betrachtet, außerhalb des Kompensationselements (1) am Statorelement (12) angeordnet ist,
wobei das Kompensationselement (1) eine erste Kompensations-Empfangsspule (30) und eine zweite Kompensations-Empfangsspule (31) aufweist, die derart zueinander und bezüglich der Drehachse (A) angeordnet sind, dass durch das elektromagnetische Kompensations-Wechselfeld in der ersten Kompensations-Empfangsspule (30) eine erste Kompensations-Wechselspannung und in der zweiten Kompensations-Empfangsspule (31) eine zweite Kompensations-Wechselspannung induziert wird, wobei sich erste Kompensations-Wechselspannung (U1) und zweite Kompensations-Wechselspannung (U2) bei einer radialen Verschiebung des ersten elektrisch leitenden Abschnitts (32) gegenüber einer vorgegebenen radialen Anordnung des ersten elektrisch leitenden Abschnitts (32) bezüglich der Drehachse (A) im Vergleich zu den Werten verändern, die die erste Kompensations-Wechselspannung (U1) und die zweite Kompensations-Wechselspannung (U2) annehmen, wenn der erste leitende Abschnitt (32) sich in der vorgegebenen radialen Anordnung befindet,
wobei die mindestens eine Kompensations-Empfangsspule (30, 31) eine identische Anzahl von ersten Teilwicklungen (30a, 31a) und zweiten Teilwicklungen (30b, 31b) umfasst, die derart zueinander und bezüglich der Drehachse (A) angeordnet sind, dass durch das elektromagnetische Kompensations-Wechselfeld in der ersten Teilwicklung (30a, 31a) ein erster Wechselspannungsanteil und in der zweiten Teilwicklung (30b, 31b) ein zweiter Wechselspannungsanteil mit umgekehrtem Vorzeichen induziert wird, wobei sich erster Wechselspannungsanteil und zweiter Wechselspannungsanteil in einer vorgegebenen radialen Anordnung des ersten elektrisch leitenden Abschnitts (32) bezüglich der Drehachse (A) kompensieren.

2. Drehwinkelsensor (10) nach einem der vorherigen Ansprüche, **dadurch gekennzeichnet, dass** eine Wicklung der mindestens einen Kompensations-Empfangsspule (30, 31) radial zur Drehachse (A) zumindest teilweise überlappend mit dem ersten elektrisch leitenden Abschnitt (32) angeordnet ist, wobei insbesondere die radiale Ausdehnung des ersten elektrisch leitenden Abschnitts (32) kleiner als die radiale Ausdehnung der mindestens einen Kompensations-Empfangsspule (30, 31) ist.

3. Drehwinkelsensor (10) nach einem der vorherigen Ansprüche, **dadurch gekennzeichnet, dass** eine Wicklung der mindestens einen Kompensations-Sendespule (28) radial zur Drehachse (A) zumindest teilweise überlappend mit dem ersten elektrisch leitenden Abschnitt (32) angeordnet ist, wobei insbesondere die radiale Ausdehnung des ersten elektrisch leitenden Abschnitts (32) kleiner als die radiale Ausdehnung der mindestens einen Kompensations-Sendespule (28) ist.

4. Drehwinkelsensor (10) nach einem der vorherigen Ansprüche, **dadurch gekennzeichnet, dass** der mindestens eine erste elektrisch leitende Abschnitt (32) ein das Rotorelement (14) in Umfangrichtung umlaufender elektrisch leitfähiger Kreis oder Kreisring ist.

5. Drehwinkelsensor (10) nach einem der Ansprüche 1 bis 5, **dadurch gekennzeichnet, dass** sich der mindestens eine erste elektrisch leitende Abschnitt (32) von der Drehachse (A) radial erstreckt, wobei sich der mindestens eine zweite elektrisch leitende Abschnitt (26) an den ersten elektrisch leitenden Abschnitt (32) radial anschließt, wobei der erste elektrisch leitende Abschnitt (32) in radialer Richtung betrachtet zwischen der Drehachse (A) und dem zweiten elektrisch leitenden Abschnitt (26) angeordnet ist,
wobei in radialer Richtung betrachtet zwischen dem zweiten elektrisch leitenden Abschnitt (26) und dem ersten elektrisch leitenden Abschnitt (32) ein, vorzugsweise kreisringsektorförmiger, Spalt (34) oder Schlitz (34) vorgesehen ist, der sich vorzugsweise in Umfangrichtung erstreckt.

6. Drehwinkelsensor (10) nach Anspruch 6, **dadurch gekennzeichnet, dass** eine radiale Ausdehnung (D1) der mindestens einen Kompensations-Empfangsspule (30, 31) größer ist als eine radiale Ausdehnung (D2) des ersten leitenden Abschnitts (32).

7. Drehwinkelsensor (10) nach Anspruch 7, **dadurch gekennzeichnet, dass** die Ausdehnung (D3) des Spaltes (34) oder des Schlitzes (34) in radialer Richtung wenigstens 50% der Differenz aus der radialen Ausdehnung (D1) der mindestens einen Kompensations-Empfangsspule (30, 31) und der radialen Ausdehnung (D2) des ersten leitenden Abschnitts (32) beträgt.

8. Drehwinkelsensor (10) nach einem der vorherigen Ansprüche, **dadurch gekennzeichnet, dass** der erste elektrisch leitende Abschnitt (32) bezüglich der Drehachse (A) symmetrisch ist, wenn sich der erste elektrisch leitende Abschnitt (32) in einer vorgegebenen radialen Anordnung zur Drehachse (A) befindet.

## Claims

1. Rotation angle sensor (10), comprising a stator element (12),
a rotor element (14) rotatably mounted about an axis of rotation (A) with respect to the stator element (12), wherein the rotation angle can be detected by an inductive coupling between the rotor element (14) and the stator element (12),
**characterized in that**
a compensation element (1) is arranged on the stator element (12), wherein the compensation element (1) comprises a compensation transmitting coil (28) for emitting an alternating electromagnetic compensation field and at least one compensation receiving coil (30, 31) for receiving alternating electromagnetic fields, wherein the rotor element (14) has a first electrically conductive section (32),
wherein the first electrically conductive section (32) is arranged on the rotor element (14) in such a way and in such a way is inductively coupled to the compensation transmitting coil (28) and to the at least one compensation receiving coil (30, 31) of the compensation element (1) that, during the emission of the alternating electromagnetic compensation field by the compensation transmitting coil (28), a compensation AC voltage, induced in the at least one compensation receiving coil (30, 31), is predominantly dependent on a relative radial arrangement of the stator element (12) and of the rotor element (14) to each other with respect to the axis of rotation (A),
wherein the stator element (12) has at least one angle detection transmitting coil (22) for emitting an alternating electromagnetic angle detection field and at least one angle detection receiving coil (20) for detecting alternating electromagnetic fields,
wherein the rotor element (14) has at least one second electrically conductive section (26),
wherein the at least one second electrically conductive section (26) is inductively coupled to the at least one angle detection receiving coil (20) in such a way that, during the emission of the alternating electromagnetic angle detection field by the at least one angle detection transmitting coil (22), at least one angle detection AC voltage is induced in the at least one angle detection receiving coil (20),
wherein the at least one second electrically conductive section (26) is arranged on the rotor element (14) in such a way that the angle detection AC voltage, induced in the at least one angle detection receiving coil (20), is dependent, in particularly predominantly dependent, on a rotation angle between the stator element (12) and the rotor element (14),
wherein the at least one second electrically conductive section (26) is arranged on the rotor element (14) outside of the first electrically conductive section (32), when viewed in the radial direction with respect to the axis of rotation (A), and wherein the at least one angle detection transmitting coil (22) is arranged on the stator element (12) outside of the compensation element (1), when viewed in the radial direction with respect to the axis of rotation (A),
wherein the compensation element (1) has a first compensation receiving coil (30) and a second compensation receiving coil (31), which are arranged in such a way with respect to each other and with respect to the axis of rotation (A) that the alternating electromagnetic compensation field induces a first compensation AC voltage in the first compensation receiving coil (30) and a second compensation AC voltage in the second compensation receiving coil (31), wherein the first compensation AC voltage (U1) and the second compensation AC voltage (U2) change in the case of a radial displacement of the first electrically conductive section (32) with respect to a predefined radial arrangement of the first electrically conductive section (32) with respect to the axis of rotation (A) in comparison to the values that the first compensation AC voltage (U1) and the second compensation AC voltage (U2) adopt when the first conductive section (32) is located in the predefined radial arrangement
wherein the at least one compensation receiving coil (30, 31) comprises an identical number of first sub-coils (30a, 31a) and second sub-coils (30b, 31b), which are arranged with respect to each other and with respect to the axis of rotation (A) in such a way that the alternating electromagnetic compensation field induces a first AC voltage component in the first sub-coil (30a, 31a) and a second AC voltage component with reversed sign in the second sub-coil (30b, 31b), wherein the first AC voltage component and the second AC voltage component compensate in a predefined radial arrangement of the first electrically conductive section (32) with respect to the axis of rotation (A).

2. Rotation angle sensor (10) according to one of the preceding claims, **characterized in that** a winding of the at least one compensation receiving coil (30, 31) is arranged at least partially overlapping with the first electrically conductive section (32) radially to the axis of rotation (A), wherein, in particular the radial extension of the first electrically conductive section (32) is smaller than the radial extension of the at least one compensation receiving coil (30, 31).

3. Rotation angle sensor (10) according to one of the preceding claims, **characterized in that** a winding of the at least one compensation transmitting coil (28) is arranged at least partially overlapping with the first electrically conductive section (32) radially to the axis of rotation (A), wherein, in particular the radial extension of the first electrically conductive section (32) is smaller than the radial extension of the at least one compensation transmitting coil (28).

4. Rotation angle sensor (10) according to one of the preceding claims, **characterized in that** the at least one first electrically conductive section (32) is an electrically conductive circle or circular ring surrounding the rotor element (14) in the circumferential direction.

5. Rotation angle sensor (10) according to one of Claims 1 to 5, **characterized in that** the at least one first electrically conductive section (32) extends radially from the axis of rotation (A), wherein the at least one second electrically conductive section (26) connects radially to the first electrically conductive section (32), wherein the first electrically conductive section (32) is arranged between the axis of rotation (A) and the second electrically conductive section (26), when viewed in the radial direction,
wherein a, preferably circular arc shaped, gap (34) or slot (34) is provided between the second electrically conductive section (26) and the first electrically conductive section (32), when viewed in the radial direction, said gap or slot preferably extending in the circumferential direction.

6. Rotation angle sensor (10) according to Claim 6, **characterized in that** a radial extension (D1) of the at least one compensation receiving coil (30, 31) is larger than a radial extension (D2) of the first conductive section (32).

7. Rotation angle sensor (10) according to Claim 7, **characterized in that** the extension (D3) of the gap (34) or slot (34) in the radial direction is at least 50% of the difference of the radial extension (D1) of the at least one compensation receiving coil (30, 31) and the radial extension (D2) of the first conductive section (32) .

8. Rotation angle sensor (10) according to one of the preceding claims, **characterized in that** the first electrically conductive section (32) is symmetrical with respect to the axis of rotation (A) when the first electrically conductive section (32) is located in a predefined radial arrangement to the axis of rotation (A) .

## Revendications

1. Capteur de position angulaire (10), comprenant
un élément statorique (12),
un élément rotorique (14) monté en rotation autour d'un axe de rotation (A) relativement à l'élément statorique (12), la position angulaire pouvant être détectée par un couplage inductif entre l'élément rotorique (14) et l'élément statorique (12),
**caractérisé en ce qu'**un élément de compensation (1) est disposé sur l'élément statorique (12), l'élément de compensation (1) comprenant une bobine émettrice de compensation (28) pour émettre un champ électromagnétique alternatif de compensation et au moins une bobine réceptrice de compensation (30, 31) pour recevoir des champs électromagnétiques alternatifs,
l'élément rotorique (14) présentant une première partie électriquement conductrice (32),
la première partie électriquement conductrice (32) étant disposée sur l'élément rotorique (14) de telle sorte et étant couplée de manière inductive avec la bobine émettrice de compensation (28) et avec ladite au moins une bobine réceptrice de compensation (30, 31) de l'élément de compensation (1) de telle sorte qu'à l'émission du champ électromagnétique alternatif de compensation par la bobine émettrice de compensation (28), une tension alternative de compensation induite dans ladite au moins une bobine réceptrice de compensation (30, 31) dépend en majeure partie d'une disposition radiale relative de l'élément statorique (12) et de l'élément rotorique (14) l'un par rapport à l'autre relativement à l'axe de rotation (A),
l'élément statorique (12) présentant au moins une bobine émettrice de détection d'angle (22) pour émettre un champ électromagnétique alternatif de détection d'angle et au moins une bobine réceptrice de détection d'angle (20) pour détecter des champs électromagnétiques alternatifs,
l'élément rotorique (14) présentant au moins une deuxième partie électriquement conductrice (26),
ladite au moins une deuxième partie électriquement conductrice (26) étant couplée de manière inductive avec ladite au moins une bobine réceptrice de détection d'angle (20) de telle sorte qu'à l'émission du champ électromagnétique alternatif de détection d'angle par ladite au moins une bobine émettrice de détection d'angle (22), au moins une tension alternative de détection d'angle est induite dans ladite au moins une bobine réceptrice de détection d'angle (20),
ladite au moins une deuxième partie électriquement conductrice (26) étant disposée sur l'élément rotorique (14) de telle sorte que la tension alternative de détection d'angle induite dans ladite au moins une bobine réceptrice de détection d'angle (20) dépend, en particulier en majeure partie, d'un angle de rotation entre l'élément statorique (12) et l'élément rotorique (14), ladite au moins une deuxième partie électriquement conductrice (26), vue dans la direction radiale relativement à l'axe de rotation (A), étant disposée sur l'élément rotorique (14) à l'extérieur de la première partie électriquement conductrice (32), et ladite au moins une bobine émettrice de détection d'angle (22), vue dans la direction radiale relativement à l'axe de rotation (A), étant disposée sur l'élément statorique (12) à l'extérieur de l'élément de compensation (1),
l'élément de compensation (1) présentant une première bobine réceptrice de compensation (30) et une deuxième bobine réceptrice de compensation (31) qui sont disposées l'une par rapport à l'autre et relativement à l'axe de rotation (A) de telle sorte que le champ électromagnétique alternatif de compensation induit une première tension alternative de compensation dans la première bobine réceptrice de compensation (30), et induit une deuxième tension alternative de compensation dans la deuxième bobine réceptrice de compensation (31), la première tension alternative de compensation (U1) et la deuxième tension alternative de compensation (U2) variant en cas de décalage radial de la première partie électriquement conductrice (32) par rapport à une disposition radiale spécifiée de la première partie électriquement conductrice (32) relativement à l'axe de rotation (A) en comparaison avec les valeurs qu'adoptent la première tension alternative de compensation (U1) et la deuxième tension alternative de compensation (U2) lorsque la première partie conductrice (32) se trouve dans la disposition radiale spécifiée,
ladite au moins une bobine réceptrice de compensation (30, 31) comprenant un nombre identique de premières fractions d'enroulement (30a, 31a) et de deuxièmes fractions d'enroulement (30b, 31b) qui sont disposées les unes par rapport aux autres et relativement à l'axe de rotation (A) de telle sorte que le champ électromagnétique alternatif de compensation induit dans la première fraction d'enroulement (30a, 31a) une première part de tension alternative et induit dans la deuxième fraction d'enroulement (30b, 31b) une deuxième part de tension alternative de signe inverse, la première part de tension alternative et la deuxième part de tension alternative se compensant dans une disposition radiale spécifiée de la première partie électriquement conductrice (32) relativement à l'axe de rotation (A).

2. Capteur de position angulaire (10) selon l'une quelconque des revendications précédentes, **caractérisé en ce qu'**un enroulement de ladite au moins une bobine réceptrice de compensation (30, 31) est disposé radialement par rapport à l'axe de rotation (A) en se chevauchant au moins partiellement avec la première partie électriquement conductrice (32), l'extension radiale de la première partie électriquement conductrice (32) étant en particulier inférieure à l'extension radiale de ladite au moins une bobine réceptrice de compensation (30, 31).

3. Capteur de position angulaire (10) selon l'une quelconque des revendications précédentes, **caractérisé en ce qu'**un enroulement de ladite au moins une bobine émettrice de compensation (28) est disposé radialement par rapport à l'axe de rotation (A) en se chevauchement au moins partiellement avec la première partie électriquement conductrice (32), l'extension radiale de la première partie électriquement conductrice (32) étant en particulier inférieure à l'extension radiale de ladite au moins une bobine émettrice de compensation (28) .

4. Capteur de position angulaire (10) selon l'une quelconque des revendications précédentes, **caractérisé en ce que** ladite au moins une première partie électriquement conductrice (32) est un cercle ou anneau de cercle électriquement conducteur passant autour de l'élément rotorique (14) dans la direction circonférentielle.

5. Capteur de position angulaire (10) selon l'une quelconque des revendications 1 à 5, **caractérisé en ce que** ladite au moins une partie électriquement conductrice (32) s'étend radialement à partir de l'axe de rotation (A), ladite au moins une deuxième partie électriquement conductrice (26) étant radialement adjacente à la première partie électriquement conductrice (32), la première partie électriquement conductrice (32), vue dans la direction radiale, étant disposée entre l'axe de rotation (A) et la deuxième partie électriquement conductrice (26),
dans lequel, vu dans la direction radiale, entre la deuxième partie électriquement conductrice (26) et la première partie électriquement conductrice (32), un interstice (34) ou une encoche (34), de préférence en forme de secteur d'arc de cercle, est prévu(e) qui s'étend de préférence dans la direction circonférentielle.

6. Capteur de position angulaire (10) selon la revendication 6, **caractérisé en ce qu'**une extension radiale (D1) de ladite au moins une bobine réceptrice de compensation (30, 31) est supérieure à une extension radiale (D2) de la première partie conductrice (32).

7. Capteur de position angulaire (10) selon la revendication 7, **caractérisé en ce que** l'extension (D3) de l'interstice (34) ou de l'encoche (34) dans la direction radiale est égale à au moins 50 % de la différence de l'extension radiale (D1) de ladite au moins une bobine réceptrice de compensation (30, 31) et de l'extension radiale (D2) de la première partie conductrice (32).

8. Capteur de position angulaire (10) selon l'une quelconque des revendications précédentes, **caractérisé en ce que** la première partie électriquement conductrice (32) est symétrique relativement à l'axe de rotation (A) si la première partie électriquement conductrice (32) se trouve dans une disposition radiale spécifiée par rapport à l'axe de rotation (A).
